# EUROPÄISCHE PATENTANMELDUNG

(11) **EP 0 535 717 A2**
(43) Veröffentlichungstag der Anmeldung: **07.04.1993**
(21) Anmeldenummer: 92120840.1
(22) Anmeldetag: 15.09.1989
(51) Int. Cl.: B62D 5/22, B62D 5/30, B62D 5/06

(54) **Hydraulische Hilfskraftlenkung für Kraftfahrzeuge**

(30) Priorität: 04.10.1988 DE 3833637; 24.12.1988 DE 3843893; 28.08.1989 DE 3928376
(62) Teilanmeldung aus: 89117078.9
(71) Anmelder: ITT Automotive Europe GmbH, D-60488 Frankfurt (DE)
(72) Erfinder: Kahrs, Manfred, Dr., W-6200 Wiesbaden (DE); Kunze, Lothar, W-6238 Hofheim-Langenhain (DE); Baier, Joachim, W-6450 Hanau 8 (DE); Kunz, Gerhard, W-6307 Linden (DE); Möller, Bernhard, W-6231 Sulzbach (DE); Beer, Wilhelm, W-6090 Rüsselsheim (DE); Krines, Hans-G., W-6390 Usingen (DE); Schudt, Gerhard, W-6450 Hanau (DE)
(74) Vertreter: Portwich, Peter

(57) **Zusammenfassung**

Es wird eine hydraulische Hilfskraftlenkung für Kraftfahrzeuge vorgeschlagen, deren hydraulische Unterstützung lediglich oberhalb einer vorgegebenen Lenkkraft erfolgt, mit einem an eine mechanische Lenkung gekoppelten Arbeitszylinder (6), einer Pumpe (19) und mindestens einem Steuerventil (12), wobei eine durch die Lenkkraft bewirkte Verschiebung eines gegenüber dem Fahrzeugkörper (5) verschiebbar gelagerten Bauteils (2,81) der mechanischen Lenkung entgegen einer Vorspannkraft der mechanischen Betätigung des Steuerventils (12) dient, und ein Druckspeicher (90) zwischen die Pumpe (19) und das Steuerventil (12) geschaltet ist.

## Beschreibung

Die Erfindung betrifft eine hydraulische Hilfskraftlenkung für Kraftfahrzeuge nach dem Oberbegriff des Anspruches 1.

Eine derartige hydraulische Hilfskraftlenkung ist aus der DE-OS 28 39 121 bekannt. Diese bekannte Hilfskraftlenkung weist einen drehwinkelabhängigen Meßwertgeber auf, der als Fühler für die aufgewendete Handkraft am Lenkrad dient. Das ermittelte Signal wird an eine elektronische Regeleinheit weitergeleitet, welche die Steuerung der Magnetventile übernimmt, welche zwischen der Pumpe und dem Arbeitszylinder angeordnet sind. Diese bekannte Hilfskraftlenkung besitzt neben dem aufwendigen und kostenintensiven Aufbau den Nachteil, daß bei einem Defekt der elektronischen Steuereinheit die Lenkung blockiert werden kann. Dieses Risiko könnte zwar durch eine redundante Auslegung der Steuerelektronik vermieden werden, jedoch würde sich der Aufwand durch diese Maßnahme nochmals erhöhen.

Der Erfindung liegt daher die Aufgabe zugrunde, eine gattungsgemäße hydraulische Hilfskraftlenkung für Kraftfahrzeuge zu schaffen, welche sich durch einen einfachen Aufbau auszeichnet und die stets eine sichere Betriebsweise garantiert. Insbesondere soll die bedarfsabhängige hydraulische Unterstützung ohne aufwendige elektronische Bauteile gesteuert werden.

Diese Aufgabe wird erfindungsgemäß durch die kennzeichnenden Merkmale des Anspruches 1 gelöst.

Um bei hohen Lenkgeschwindigkeiten und großem Druckmittelbedarf die Druckmittelversorgung auch mit einer Pumpe mit geringer Leistungsaufnahme sicherzustellen, ist es von Vorteil, wenn zwischen Pumpe und Steuerventil ein Druckspeicher geschaltet ist. Um eine unerwünschte Entladung des Speichers durch Leckverluste am Steuerventil zu vermeiden, ist bei einer bevorzugten Ausführungsform der Erfindung ein Schaltventil zwischen dem Druckspeicher und dem Steuerventil vorgesehen.

Wird die hydraulische Hilfskraftlenkung mit Bremsflüssigkeit als Druckmittel betrieben, so ist ohne Medientrennung eine Energieversorgung durch die Pumpe einer hydraulischen Bremsanlage möglich.

Eine Ausführung der Erfindung für den Fall, daß das Lenkgetriebe fest mit dem Fahrzeugaufbau verbunden sein muß, sieht vor, daß ein Abschnitt der Lenkwelle verschiebbar gelagert ist und daß diese Verschiebung durch eine aus der Lenkkraft resultierende Kraftkomponente das Steuerventil betätigt. Zur Erzeugung dieser Reaktionskraftkomponenten eignen sich besonders Lenkgetriebe, die entweder als Zahnstangengetriebe mit Schrägverzahnung oder als Kugelumlauflenkungsgetriebe ausgeführt sind. Bei beiden Ausführungen wird eine der Lenkkraft in Größe und Richtung proportionale Reaktionskraftkomponente in der Lenkwelle erzeugt, welche zur Beeinflußung des Steuerventils genutzt werden kann, welches in diesem Falle vorzugsweise in der Lenkwelle bzw. dem Lenkwellengehäuse integriert ist. Je nach Anwendungsfall empfehlen sich verschiedene Ausführungen der Federelemente zur Erzeugung der Vorspannkraft, mit welcher das verschiebbare Bauteil beaufschlagt ist.

Die Funktion und weitere vorteilhafte Merkmale der Erfindung ergeben sich aus der nachstehenden Beschreibung anhand der Zeichnung. Für einander entsprechende Teile werden im folgenden die gleichen Bezugszeichen gewählt.

Hierzu zeigt:
- Fig. 1: eine hydraulische Hilfskraftlenkanlage mit einem gegenüber dem Fahrzeugkörper verschiebbaren Bauteil,
- Fig. 2: eine Ausführung der Erfindung mit Druckspeicher und mittig offenem Steuerventil,
- Fig. 3: eine Erfindungsausführung mit mittig geschlossenem Steuerventil,
- Fig. 4: eine Ausführungsform der Erfindung mit einem über das Federelement an die Lenkwelle gekoppelten Steuerventil,
- Fig. 5: einen Schnitt durch eine Ausführung des Federelements und durch das Steuerventil,
- Fig. 6 bis Fig. 8: Schnitte durch ein Federelement, gemäß Fig. 5
- Fig. 9: ein Kräftediagramm.

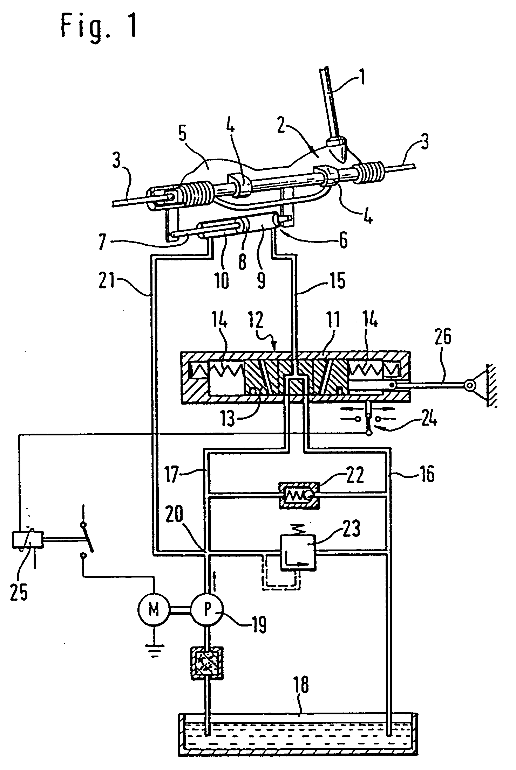

Die hydraulische Hilfskraftlenkung gemäß Fig. 1 zeigt eine mechanische Lenkung, welche sich aus der Lenkwelle 1, dem Lenkgetriebe 2, und der Spurstange 3 zusammensetzt. Die Spurstangen sind an nicht dargestellte Lenkhebel der Radaufhängung angelenkt. Das Lenkgetriebe 2 ist mittels zweier Schellen 4 und gummielastischer Elemente am fest mit dem Fahrzeugkörper verbundenen Fahrzeugaufbau 5 verschraubt. Die gummielastische Aufhängung des Lenkgetriebes 2 gestattet eine bestimmte Verschiebbarkeit in die Fahrzeugquerrichtung.

Der Arbeitszylinder 6 ist fest mit dem Gehäuse des Lenkgetriebes 2 verschraubt, während die Kolbenstange 7 fest mit der Spurstange 3 verbunden ist. Am anderen Ende der Kolbenstange 7 befindet sich der Arbeitskolben 8, welcher im Arbeitszylinder 6 die Arbeitskammern 9 und 10 voneinander trennt. Das Gehäuse 11 des Steuerventils 12 ist fest mit dem Arbeitszylinder 6 bzw. mit dem Lenkgetriebe verbunden. In dem Gehäuse 11 ist der verschiebbar gelagerte Steuerschieber 13 mittels zweier gleichstarker Federn 14 gegen das Gehäuse in beide Verschieberichtungen vorgespannt und in Ruhestellung zentriert.

Das Steuerventil 12 ist als 3/3-Wegeventil ausgebildet, wobei ein Anschluß über die Verbindung 15 mit der Arbeitskammer 9 des Arbeitszylinders 6 verbunden ist, während die beiden anderen Anschlüsse über die Verbindungen 16 und 17 mit dem Behälter 18 bzw. dem Druckanschluß der Pumpe 19 verbunden sind.

Der Arbeitszylinder 6 ist als Differentialzylinder ausgebildet, wobei die Arbeitskammer 9 der größeren Druckbeaufschlagungsfläche am Arbeitskolben zugeordnet ist, während die Querschnittsfläche des Kolbens, welche der Arbeitskammer 10 zugeordnet ist, halb so groß ist wie die erstgenannte Druckbeaufschlagungsfläche Vom Knotenpunkt 20 der Verbindung 17 führt eine Druckmittelleitung 21 zur Arbeitskammer 10 des Arbeitszylinders 6. Zwischen den Verbindungen 16 und 17 sind zwei Verbindungen vorgesehen, wobei in der einen ein Nachsaugventil 22 und in der anderen ein Überdruckventil 23 angeordnet ist.

In der Verbindung zwischen dem Behälter 18 und der von einem Elektromotor angetriebenen Pumpe 19 ist ein Filterelement angeordnet. Der elektrische Antrieb der Pumpe 19 wird über ein Relais 25 von dem elektrischen Schalter 24 betätigt. Die Schalterbetätigung erfolgt durch ein Verschieben des Steuerschiebers 13 aus der Ruhestellung heraus. Der Steuerschieber 13 ist mittels eines Reaktionsstabes 26 an einem fahrzeugfesten Punkt angelenkt.

Bei unbetätigter Lenkung bzw. bei einer Betätigung der Lenkung mit einer sehr geringen Handkraft befindet sich die hydraulische Hilfskraftlenkung an der dargestellten Ruhestellung. In dieser Stellung ist die Pumpe 19 die durch den elektrischen Schalter 24 ausgeschaltet. Die Arbeitskammern 9 und 10 sind hydraulische miteinander und mit dem Behälter verbunden. Wird die Lenkung beispielsweise bei stehendem Fahrzeug oder bei sehr niedrigen Geschwindigkeiten betätigt, so sind höhere Lenkkräfte erforderlich. In diesem Falle verschiebt sich Lenkgetriebe 2 entsprechend der Lenkrichtung innerhalb seiner elastischen Aufhängung am Fahrzeugaufbau in eine Richtung, welche quer zur Fahrzeuglenkachse liegt. Da die gesamte hydraulische Einheit, insbesondere aber das Gehäuse 11 des Steuerventils 12, fest mit dem Lenkgetriebe 2 verbunden ist, während der Steuerschieber 13 an einem Fahrzeugaufbau festen Punkt angelenkt ist, erfolgt ab einer Lenkkraft, welche größer ist als die Vorspannung der entsprechenden Feder 14 eine Relativverschiebung zwischen dem Gehäuse 11 und dem Steuerschieber 13. Durch diese Relativverschiebung wird der die Pumpe antreibende Elektromotor eingeschaltet, außerdem wird das Steuerventil 12 je nach Lenkrichtung in einer Schaltstellung gebracht, bei welcher der Arbeitskolben 8 entsprechend seiner wirksamen Querschnittsflächen vom Pumpendruck beaufschlagbar ist.

Bei eingeschalteter Pumpe 19 ist die Arbeitskammer 10 stets druckbeaufschlagt, so daß sich bei einer Schaltstellung des Steuerventils 12, bei welcher die Arbeitskammer 9 mit dem Behälter 18 verbunden ist, eine Bewegungsrichtung des Arbeitskolbens 8 ergibt, bei welcher die Kolbenstange 7 in den Arbeitszylinder 6 hineinverschoben wird. Wird dagegen sowohl die Arbeitskammer 10 als auch die Arbeitskammer 9 mit dem Pumpendruck beaufschlagt, so wird die Kolbenstange 7 aus dem Arbeitszylinder 6 herausgeschoben. Fällt bei oder nach einer Lenkbewegung die aufgebrachte Lenkkraft an den Spurstangen unter einen Wert, welcher geeignet ist, die Vorspannung der entsprechenden Feder 14 zu überwinden, so stellt sich das Steuerventil 12 wieder in seine Ruhelage zurück, wobei die Pumpe ausgeschaltet wird und die Arbeitskammern 9 und 10 wieder miteinander und mit dem Behälter 18 verbunden sind.

Bei einer Lenkung ohne Servounterstützung wird das Druckmittel drucklos zwischen den beiden Arbeitskammern hin und her geschoben, wobei die sich aus dem Volumen der Kolbenstange ergebende Differenzflüssigkeitsmenge je nach Lenkrichtung aus dem Behälter nachgesaugt oder in diesen hineinverschoben wird. Dies gilt sowohl für den Fall daß die von Hand aufgebrachte Lenkkraft sehr gering ist, als auch für den Fall eines Ausfalls der Pumpe bzw. der elektrischen Energieversorgung des Antriebsmotors.

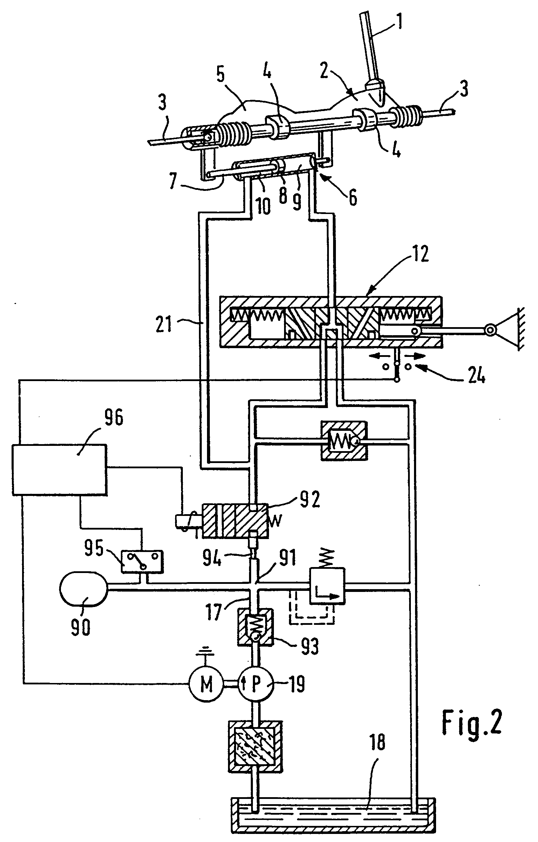

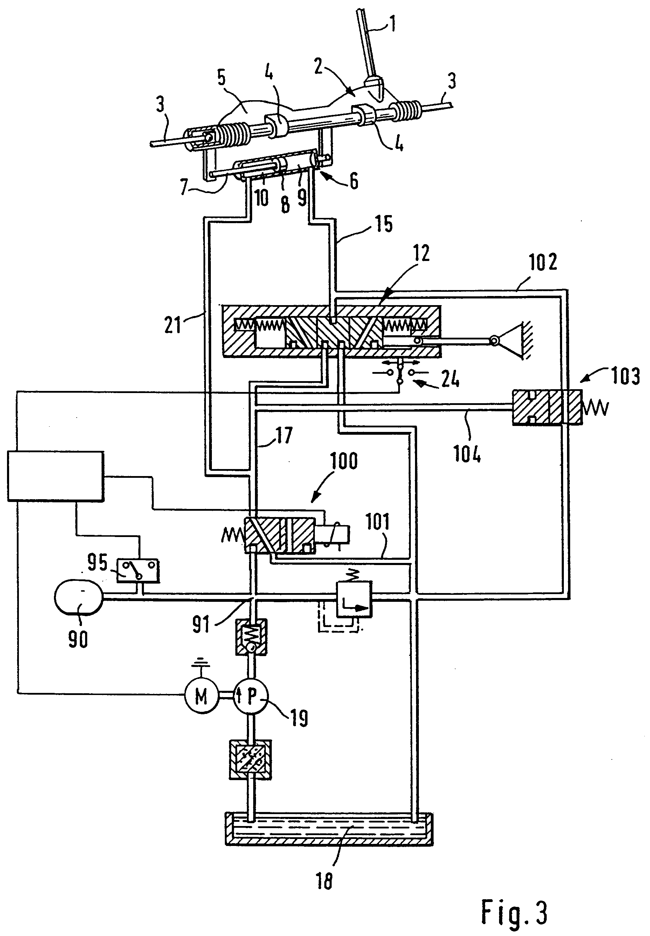

Die Figuren 2 und 3 zeigen Ausführungsformen der Erfindung, bei denen zur Deckung des Druckmittelbedarfes ein Speicher an die hydraulische Einheit angeschlossen ist. Dies ist insbesondere dann empfehlenswert, wenn aus Energie- oder Kostengründen die Leistungsaufnahme der Pumpe bzw. des Elektromotors beschränkt ist. Die Ausführung gemäß Fig. 2 entspricht in Aufbau und Funktion im wesentlichen der in Fig. 1 dargestellten Version, jedoch ist an die Verbindung 17 zwischen Pumpe und Steuerventil 12 bzw. an die Verbindung 21, welche die Pumpe mit der Arbeitskammer 10 verbindet, ein Druckspeicher 90 an den Knotenpunkt 91 angeschlossen. Zwischen dem Knotenpunkt 91 und der Anschlußstelle der Druckmittelleitung 21 an die Verbindung 17 ist ein stromlos geschlossenes Schaltventil 92 geschaltet. Zwischen der Pumpe 19 und dem Knotenpunkt 91, an den auch das Druckbegrenzungsventil 23 angeschlossen ist, ist ein Rückschlagventil 93 vorgesehen, welches die Durchflußrichtung vom Knotenpunkt 91 zur Pumpe 19 sperrt. Zwischen dem Knotenpunkt 91 und dem Schaltventil 92 ist eine Drossel 94 angeordnet.

Ein vom Druck des Druckspeichers 90 beaufschlagter Druckschalter 95 schaltet bei Druckabfall über die elektrische Steuerung 96 die Pumpe 19 ein. Das Schaltventil 92 ermöglicht in geschlossener Schaltstellung einen Druckaufbau im Druckspeicher 90, da letzterer sonst durch die Ausführung des Steuerventils 12 als mittig offenes Steuerventil stets mit dem Behälter 18 verbunden wäre.

Wird durch Einleitung einer Lenkbewegung durch den Fahrer der elektrische Schalter 24 betätigt, so wird sowohl die Pumpe 19 als auch das Schaltventil 92 geschaltet, so daß eine Verbindung zwischen dem Knotenpunkt 91 und der Arbeitskammer 10 bzw. dem Steuerventil 12 hergestellt ist.

Eine besonders ökonomische, da mit sehr geringen Leckverlusten behaftete Ausführungsform der Erfindung sieht ein mittig geschlossenes Steuerventil 12 vor, wie es in Fig. 3 dargestellt ist. Diese Ausführung entspricht im wesentlichen der in Fig. 2 gezeigten, jedoch ist statt des Schaltventils 92 ein 3/2-Wegeventil 100 eingesetzt, welches in stromlosem Zustand die Verbindung zwischen dem Knotenpunkt 21 und dem Steuerventil 12 bzw. der Arbeitskammer 10 unterbricht, jedoch die Druckmittelleitung 21 über die Verbindung 101 an den Behälter 18 anschließt. An die Verbindung 15 zwischen dem Steuerventil 12 und der Arbeitskmmer 9 ist eine Leitung 102 angeschlossen, welche ebenfalls zum Behälter 18 führt. In diese Leitung 102 ist ein hydraulisch schaltbares Sperrventil 103 geschaltet, welches im unbetätigten Zustand geöffnet ist. Geschaltet wird dieses Sperrventil 103 durch eine Steuerleitung 104, welche an die Verbindung 17 angeschlossen ist.

Wie auch bei der Ausführung gemäß Fig. 2 wird bei Druckabfall im Druckspeicher 90 die Pumpe 19 mittels des Druckschalters 95 eingeschaltet. Bei einer Lenkbetätigung schaltet der elektrische Schalter 24 sowohl die Pumpe als auch das 3/2-Wegeventil 100. In dieser Schaltstellung ist der Durchgang von der Verbindung 17 zur Verbindung 101 geschlossen, die Verbindung vom Knotenpunkt 21 zum Steuerventil 12 bzw. zur Arbeitskammer 10 geöffnet. Durch den sich aufbauenden Druck in der Verbindung 17 wird das Sperrventil 103 geschlossen. Selbstverständlich wird bei der Lenkbetätigung wie oben beschrieben, auch der Steuerschieber 13 betätigt, der die Druckbeaufschlagung der Arbeitskammern 10 und 9 steuert. Bei einer Lenkung mit sehr niedriger Lenkkraft, bei der der elektrische Schalter 24 nicht betätigt wird, ist durch die Verbindung der Arbeitskammern 9,10 über das Sperrventil 103 bzw. das 3/2-Wegeventil 100 mit dem Behälter 18 ein druckloses Verschieben des Druckmittels von einer Arbeitskammern in die andere möglich.

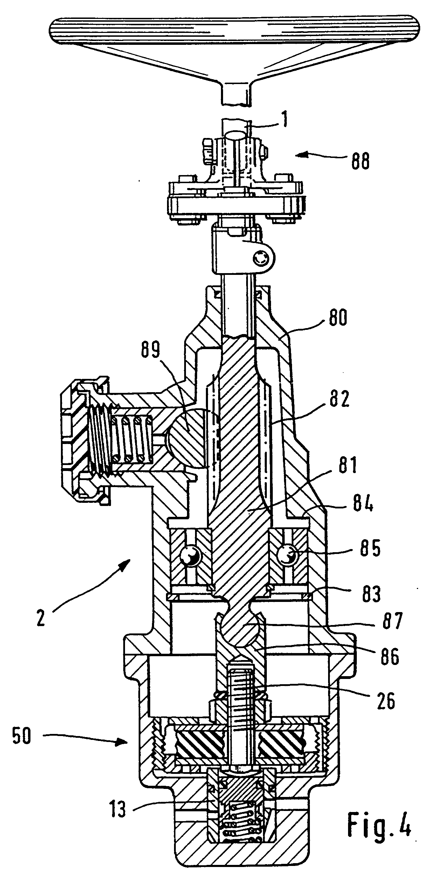

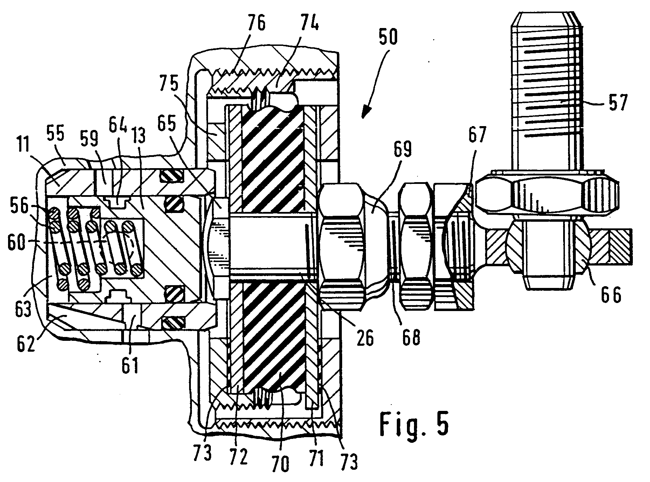

Eine Ausführung der Erfindung gemäß Fig. 4 kommt in erster Linie dann zur Anwendung, wenn eine querelastische Lagerung des Lenkgetriebes am Fahrzeugaufbau nicht möglich ist. In diesem Fall wird als Steuergröße, welche den Steuerschieber 13 betätigt, die Relativbewegung zwischen der Lenkwelle und ihrem Gehäuse 80 benutzt. Gemäß Fig. 4 ist hierzu das Gehäuse 80 des Lenkgetriebes 2 fest mit dem Fahrzeugaufbau verbunden. Das Lenkgetriebe 2 ist als Zahnstangenlenkung mit Schrägverzahnung ausgeführt. Der Abschnitt 81 der Lenkwelle 1, welcher das Antriebsritzel 82 trägt, ist axial verschiebbar im Gehäuse 80 gelagert. Die axiale Verschiebbarkeit wird dadurch erreicht, daß der Außenring eines auf der Lenkwelle axial fixierten Kugellagers 85 auf einer Gleitfläche zwischen den Anschlägen 83, 84 geführt ist. Der Abschnitt 81 der Lenkwelle 1 ist gelenkig mit einem Verbindungsglied 86 verbunden. Hierzu ist das Verbindungsglied pfannenartig mit dem kugelförmig ausgebildeten Ende 87 des Abschnitts 81 verstemmt. In dem Verbindungsglied 86 ist der Reaktionsstab 26 eingeschraubt, welcher ähnlich wie in Fig. 5 dargestellt am Steuerschieber 13 anliegt und über das gefesselte Federelement 50 elastisch mit dem Gehäuse 80 verbunden ist. Zum Ausgleich des axialen Hubes des Abschnittes 81 der Lenkwelle ist dieser über eine Ausgleichsvorrichtung 88 mit dem Lenkrad verbunden.

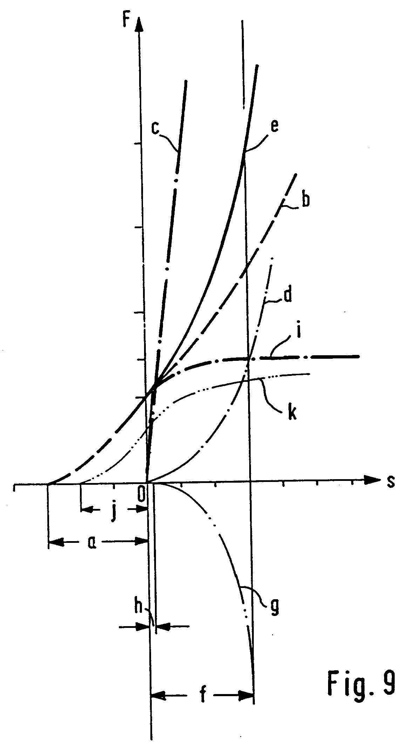

Wird das Lenkrad vom Fahrer in eine Richtung gedreht, so wird diese Drehbewegung des Antriebsritzels 82 in eine Axialbewegung der Zahnstange 89 umgesetzt. Durch die Schrägverzahnung wird je nach Drehrichtung des Lenkrades eine axiale Kraftkomponente des Abschnittes 81 wirksam, welche eine Axialverschiebung des Abschnittes 81 zur Folge hat, bis der Außenring des Kugellagers 85 entweder am Anschlag 84 oder am Anschlag 83 anliegt. Auf diese Weise wird in Abhängigkeit von der Lenkrichtung der Steuerschieber 13 beaufschlagt. Die Erläuterungen der Funktionsweise, insbesondere anhand der Fig. 9 gelten auch für diese Ausführungsform. Aus Gründen der Übersichtlichkeit ist die hydraulische Einheit bis auf das Steuerventil 12 in Fig. 4 nicht dargestellt.

Eine Besonderheit der Ausführung gemäß Fig. 4 liegt in der Erzielung der Vorspannung des Reaktionsstabes 26 bzw. des Steuerschiebers 13. Dies soll anhand Fig. 5 näher erläutert werden, welche einen vergrößerten Ausschnitt aus Fig. 4 zeigt.

Das abgedichtet im Zwischenflansch 55 befestigte Gehäuse 11 des Steuerventils 12 weist drei axial und radial versetzte Steuerbohrungen 59,60,61 auf. Durch entsprechende Kanäle im Zwischenflansch ist entsprechend dem in Fig.1 gezeigten Schaltschema die Steuerbohrung 59 mit der Druckseite der Pumpe 19 und der Arbeitskammer 10 verbunden. Die Steuerbohrung 60 führt zur Arbeitskammer 9, während die Steuerbohrung 61 an den Behälter 18 angeschlossen ist. Über die Nut 62 im Gehäuse 11 ist die Kammer 63, in welcher die Schraubenfedern 56 angeordnet sind, ebenfalls mit dem Behälter verbunden. Der Steuerschieber 13 ist mit einer gestuften Ringnut 64 versehen, durch welche die Steuerkanten gebildet werden. Durch die sich radial nach außen erweiternde Stufe der Ringnut 64 wird eine weiche Schaltcharakteristik erreicht.

Die der Kammer 63 gegenüberliegende Stirnseite des Steuerschiebers 13 liegt an dem nach außen gewölbten Kopfteil 65 des Reaktionsstabes 26 an. Der Reaktionsstab 26 ist mittels der Schraube 57 mit dem Fahrzeugaufbau fest verbunden. Durch die Lagerung der Schraube 57 im Reaktionsstab 26 über eine kugelförmige Buchse 66 ist der Winkel zwischen der Schraube 57 und dem Reaktionsstab 26 variierbar, wodurch ein Verspannen oder Verklemmen vermieden wird. Die Buchse 66 ist in einem Kupplungsstück 67 gehalten, welches auf dem Gewindeabschnitt 68 des Reaktionsstabes 26 aufgeschraubt ist. Hierdurch kann eine grobe Längenanpassung an die Einbauverhältnisse erfolgen. Nach der Einstellung wird das Kupplungsstück 67 durch eine Kontermutter verspannt. Die Einstellmutter 69 ist ebenfalls auf dem Gewindeabschnitt 68 aufgeschraubt. Mit der Einstellmutter 69 wird die Vorspannung des Federelementes 50 eingestellt, welches sich zwischen dieser und dem Kopfteil 65 befindet.

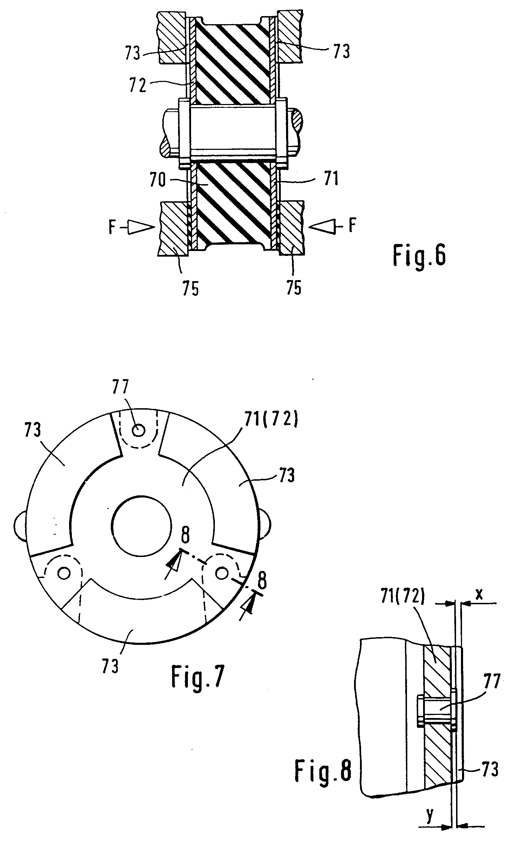

Das Federelement 50 setzt sich aus dem elastomeren Block 70, den Platten 71,72 den elastischen Abschnitten 73 sowie den beiden Gehäuseteilen 74,75 zusammen. Zum besseren Verständnis ist der Aufbau des Federelementes 50 in den Figuren 6 bis 8 detailliert dargestellt.

Die Vorspannung des elastomeren Blocks 70 wird durch das axiale Zusammenpressen der Platten 71,72, welche jeweils an einer Stirnseite des ringförmigen elastomeren Blockes angeordnet sind, durch die Einstellmutter 69 erreicht. An den dem Dämpfungsblock 70 gegenüberliegenden Stirnseiten der Platten 71,72 sind elastische Abschnitte 73 vorgesehen, welche jeweils an einem der beiden Gehäuseteilen 74,75 anliegen, die das Dämpfungselement umgeben. Das Gehäuseteil 75 weist an seiner radialen Mantelfläche ein Außengewinde auf, mit welchem es in das Innengewinde des Gehäuseteils 74 einschraubbar ist.

Durch diese Verschraubung wird eine spielfreie Anlage oder auch Vorspannung der elastischen Abschnitte zwischen den beiden Gehäuseteilen 74,75 eingestellt. Mit dem Außengewinde 76 ist das Gehäuseteil 74 in den Zwischenflansch 55 einschraubbar, womit die axiale Lage des Reaktionsstabes 26 und des Steuerschiebers 13 eingestellt werden kann.

Zum Schalten der Pumpe 19 sind im Federelement 50 Schaltkontakte 77 angeordnet, welche an den Platten 71,72 befestigt sind. Die Schaltkontakte 77 ragen axial um das Maß Y über die Platte 71 bzw. 72 in Richtung der jeweiligen Gehäusehälfte heraus. Nachdem sich die elastischen Abschnitte 73 um den Betrag X komprimiert haben, wird der Kontakt durch Anlage des Schaltkontaktes 77 an der jeweiligen Gehäusehälfte geschlossen.

Die elastischen Abschnitte 73 dienen auch der Geräuschdämpfung durch Vermeidung von Körperschall und der Dämpfung mechanischer Stöße in der Lenkung.

Zum besseren Verständnis der Wirkungsweise des Federelementes 50 innerhalb der erfindungsgemäßen Ausführungsformen wird auf Figur 9 verwiesen, welche ein Kräfte- bzw. Federdiagramm zeigt. Dabei ist auf der Abszisse die Verschiebung des Lenkgetriebes in Querrichtung aufgetragen, die Ordinate gibt die jeweils aufzuwendenden Kräfte an.

Die Kurve b gibt die Steifigkeit des vorgespannten elastomeren Blocks 70 an, dessen Vorspannung durch das Zusammenpressen um das Maß a erreicht wird. Die Gerade c zeigt die Steifigkeit der elastischen Abschnitte 73. Die Kurve d zeigt die Steifigkeit der Lagerung mit welcher das Lenkgetriebe 2 am Fahrzeugaufbau 5 querverschieblich befestigt ist. Die Kurve e ergibt sich aus der Summe der Kurven b und d und ist somit die Gesamtquersteifigkeit, welche überwunden werden muß, um das Lenkgetriebe bis zum maximalen Verschiebeweg f zu verschieben. Die Kurve e beschreibt die Kraftentfaltung des Arbeitszylinders, welche die Muskelarbeit des Lenkers unterstützt. Die Pumpe wird nach Verschieben des Lenkgetriebes um den Betrag h geschaltet. Subtrahiert man die Kraftentfaltung g des Arbeitszylinders von der Gesamtsteifigkeit in Querrichtung e, so erhält man die Kurve i, welche die vom Fahrer aufzuwendende Kraft angibt. Nach Erreichen des nmaximalen Verschiebeweges f des Lenkgetriebes bleibt die vom Fahrer aufzuwendende Muskelkraft konstant. Soll die vom Fahrer aufzubringende Kraft verringert werden, so läßt sich dies beispielsweise durch eine geringere Vorspannung des elastomeren Blockes 70 erreichen. Wird dieser nämlich nur um das Maß j vorverformt, so ergibt sich die Kurve k als Kennlinie der vom Fahrer aufzubringenden Muskelkraft.

Wenn beim Lenken der maximale Lenkeinschlag der Räder erreicht ist, wenn also ein Anschlag der Zahnstange am Gehäuse des Lenkgetriebes zum Anliegen kommt, so tritt eine sogenannter Kraftkurzschluß ein, d.h. es wird keine Reaktionskraft mehr in der elastischen Aufhängung des Lenkgetriebes 2 am Aufbau 5 wirksam. Dadurch wird das Steuerventil 12 in seine Mittelstellung gebracht und die hydraulische Hilfskraft wird ausgeschaltet.

Sollte sich ein Rad an einem "äußeren Anschlag" anlegen - z.B. an einem Bordstein -, so wird die auf das Federelement 50 ausgeübte Kraft stark ansteigen. Bei einer Ausführung gemäß Fig. 5 wird sich z.B. bei einer Lenkrichtung, welche den Reaktionsstab 26 vom Steuerschieber 13 wegbewegt, der elastische Block 70 sehr stark komprimiert. Dabei wird der Steuerschieber 13 durch Schraubenfedern 56 stets nachgeführt. Dies geschieht so lange, bis die der Kammer 63 zugewandte Stirnseite des Steuerschiebers 13 einer Verbindung der Steuerbohrung 59 zur Kammer 63 und damit zum Behälter freigibt. Durch diese Maßnahme, welche durch eine genau definierte und ausgelegte Geometrie des Steuerschiebers 13 einstellbar ist, ist eine Druckbegrenzung des Systems hergestellt. Für eine Verschiebung in die Gegenrichtung ist die gleiche Maßnahme vorgesehen, jedoch in Fig. 5 nicht dargestellt.

### Bezugszeichenliste

- 1: Lenkwelle
- 2: Lenkgetriebe
- 3: Spurstange
- 4: Schelle
- 5: Fahrzeugaufbau
- 6: Arbeitszylinder
- 7: Kolbenstange
- 8: Arbeitskolben
- 9: Arbeitskammer
- 10: Arbeitskammer
- 11: Gehäuse
- 12: Steuerventil
- 13: Steuerschieber
- 14: Feder
- 15: Verbindung
- 16: Verbindung
- 17: Verbindung
- 18: Behälter
- 19: Pumpe
- 20: Knotenpunkt
- 21: Druckmittelleitung
- 22: Nachsaugventil
- 23: Überdruckventil
- 24: elektrischer Schalter
- 25: Relais
- 26: Reaktionsstab
- 50: Federelement
- 55: Zwischenflansch
- 56: Schraubenfeder
- 57: Schraube
- 59: Steuerbohrung
- 60: Steuerbohrung
- 61: Steuerbohrung
- 62: Nut
- 63: Kammer
- 64: Ringnut
- 65: Kopfteil
- 66: Buchse
- 67: Kupplungsstücxk
- 68: Gewindeabschnitt
- 69: Einstellmutter
- 70: Block
- 71: Platte
- 72: Platte
- 73: elastischer Abschnitt
- 74: Gehäuseteil
- 75: Gehäuseteil
- 76: Außengewinde
- 77: Schaltkontakt
- 80: Gehäuse
- 81: Abschnitt
- 82: Antriebsritzel
- 83: Anschlag
- 84: Anschlag
- 85: Kugellager
- 86: Verbindungsglied
- 87: Ende
- 88: Ausgleichsvorrichtung
- 89: Zahnstange
- 90: Druckspeicher
- 91: Knotenpunkt
- 92: Schaltventil
- 93: Rückschlagventil
- 94: Drossel
- 95: Druckschalter
- 96: Steuerung
- 100: 3/2-Wegeventil
- 101: Verbindung
- 102: Leitung
- 103: Sperrventil
- 104: Steuerleitung

## Patentansprüche

1. Hydraulische Hilfskraftlenkung für Kraftfahrzeuge, wobei die hydraulische Unterstützung lediglich oberhalb einer vorgegebenen Lenkkraft erfolgt, mit einem an eine mechanische Lenkung gekoppelten Arbeitszylinder (6), einer Pumpe (19) und mindestens einem Steuerventil (12), wobei eine durch die Lenkkraft bewirkte Verschiebung eines gegenüber dem Fahrzeugkörper (5) verschiebbar gelagerten Bauteils (2,81) der mechanischen Lenkung entgegen einer Vorspannkraft der mechanischen Betätigung des Steuerventils (12) dient, dadurch **gekennzeichnet**, daß ein Druckspeicher (90) zwischen die Pumpe (19) und das Steuerventil (12) geschaltet ist.

2. Hydraulische Hilfskraftlenkung nach Anspruch 1, dadurch **gekennzeichnet**, daß zwischen dem Druckspeicher (90) und dem Steuerventil (12) ein Schaltventil (92,100) vorgesehen ist.

3. Hydraulische Hilfskraftlenkung nach Anspruch 1 oder 2, dadurch **gekennzeichnet,** daß zwischen dem Druckspeicher (90) und dem Steuerventil (12) eine Drosselstelle (94) vorgesehen ist.

4. Hydraulische Hilfskraftlenkung nach Anspruch 2 oder 3, dadurch **gekennzeichnet**, daß das Schaltventil ein 2/2-Wegeventil ist.

5. Hydraulische Hilfskraftlenkung nach Anspruch 2 oder 3, dadurch **gekennzeichnet**, daß das Schaltventil ein 3/2-Wegeventil ist.

6. Hydraulische Hilfskraftlenkung nach Anspruch 5, dadurch **gekennzeichnet**, daß durch das 3/2-Wegeventil (100) eine Verbindung (17,21,101,102) zwischen den beiden Arbeitskammern (9,10) und dem Behälter (18) schaltbar ist.

7. Hydraulische Hilfskraftlenkung nach einem der Ansprüche 2 bis 6, dadurch **gekennzeichnet**, daß das Schaltventil (91,100) in stromlosem Zustand die Verbindung (17,21) zwischen der Pumpe (19) und von dem Druckspeicher (90) zum Steuerventil (12) unterbricht.

8. Hydraulische Hilfskraftlenkung nach einem der Ansprüche 2 bis 7, dadurch **gekennzeichnet**, daß zusätzlich zu der durch das Steuerventil (12) schaltbaren Verbindung zwischen den Arbeitskammern und dem Behälter (18) jeweils eine weitere schaltbare Verbindung zwischen jeweils einer Arbeitskammer und dem Behälter (18) vorgesehen ist.

9. Hydraulische Hilfskraftlenkung nach einem der vorhergehenden Ansprüche, dadurch **gekennzeichnet**, daß die hydraulische Einheit mit Bremsflüssigkeit betrieben wird.

10. Hydraulische Hilfskraftlenkung nach einem der vorhergehenden Ansprüche, dadurch **gekennzeichnet**, daß die Energieversorgung einer hydraulischen Bremsanlage auch die hydraulische Hilfskraftlenkung mit Druckmittel versorgt.

11. Hydraulische Hilfskraftlenkung nach einem der vorhergehenden Ansprüche, dadurch **gekennzeichnet**, daß das Lenkgetriebe (2) als Zahnstangengetriebe mit einem Antriebsritzel und einer Zahnstange ausgeführt ist.

12. Hydraulische Hilfskraftlenkung nach Anspruch 11, dadurch **gekennzeichnet,** daß das Lenkgetriebe (2) eine Schrägverzahnung aufweist.

13. Hydraulische Hilfskraftlenkung nach einem der vorhergehenden Ansprüche, dadurch **gekennzeichnet**, daß das Lenkgetriebe (2) als Kugelumlauflenkgetriebe mit einer Antriebsschnecke, die über eine Kugelkette mit dem Arbeitskolben (8) in Verbindung steht, ausgebildet ist.

14. Hydraulische Hilfskraftlenkung nach Anspruch 12, dadurch **gekennzeichnet**, daß zumindest der Abschnitt (81) der Lenkwelle (1) der das Antriebsritzel (82) aufweist, axial verschiebbar in einem Gehäuse gelagert und durch ein Federelement vorgespannt ist und daß die Verschiebung des Abschnitts (81) das Steuerventil (12) betätigt.

15. Hydraulische Hilfskraftlenkung nach Anspruch 13, dadurch **gekennzeichnet,** daß zumindest der Abschnitt der Lenkwelle, welcher die Antriebsschnecke aufweist, axial verschiebbar in einem Gehäuse gelagert und durch eine Federelement vorgespannt ist und daß die Verschiebung dieses Abschnitts das Steuerventil betätigt.
